# DEMANDE DE BREVET EUROPEEN

(11) **EP 4 733 140 A1**
(43) Date de publication de la demande: **29.04.2026**
(21) Numéro de dépôt: 25209678.9
(22) Date de dépôt: 20.10.2025
(51) Int. Cl.: B60R 16/02, H02G 3/04

(54) **SUPPORT POUR LA FIXATION ET LA CONNEXION D'UN PREMIER FAISCEAU DE CÂBLAGE ET D'UN DEUXIÈME FAISCEAU DE CÂBLAGE**

(30) Priorité: 21.10.2024 FR 2411458
(71) Demandeur: Renault s.a.s, 92100 Boulogne Billancourt (FR)
(72) Inventeur: DEVARAJAN, Soundar, 603002 Kancheepuram (IN); ISMAIL-ABRAR, Mohammed, 603002 Kancheepuram (IN); RAVICHANDRAN, Senathipathi, 603002 Kancheepuram (IN); PERAKA, Varun, 603002 Kancheepuram (IN)

(57) **Abrégé**

L'invention concerne un support (100) pour la fixation et la connexion d'un premier faisceau de câblage provenant d'un compartiment moteur d'un véhicule et d'un deuxième faisceau de câblage provenant d'une cabine dudit véhicule, comprenant : au moins une portion de fixation (111, 112) pour la fixation du premier faisceau de câblage contre le support (100), au moins une portion de fixation (121) pour la fixation du deuxième faisceau de câblage contre le support (100), au moins une portion d'attache (131, 132) pour l'attache du support (100) à une partie de soutien (200) du véhicule ; une partie de connexion (150) pour une connexion électrique entre les premier et deuxième faisceaux de câblage et une partie de blindage (160) configurée pour protéger ladite partie de connexion (150) ainsi que les connecteurs du faisceau de câblage contre les gravillons.

## Description

### Domaine technique et contexte

La présente invention concerne un support pour la fixation et la connexion d'un premier faisceau de câblage provenant d'un compartiment moteur d'un véhicule et d'un deuxième faisceau de câblage provenant d'une cabine dudit véhicule, et un véhicule comprenant ledit support.

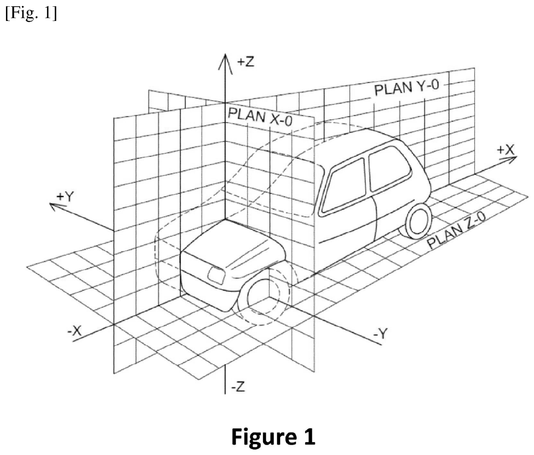

À des fins de description, il sera fait référence à un système de coordonnées XYZ direct orthonormé illustré à la figure 1, couramment utilisé dans la conception automobile. Dans ce système de coordonnées XYZ, l'axe X désigne la direction longitudinale avant-arrière du véhicule, orientée vers l'arrière ; l'axe Y désigne la direction transversale, et est orienté vers la droite du véhicule ; l'axe Z désigne la direction verticale, et est orienté vers le haut.

Dans les véhicules électriques ou hybrides, le compartiment moteur comprend un chargeur électrique auquel une prise dans la cabine du véhicule est connectée pour charger une charge à l'intérieur de la cabine, par exemple un appareil d'un passager du véhicule.

Cependant, il est nécessaire de permettre un accès facile à l'interconnexion entre le chargeur électrique et la prise dans la cabine, pour faciliter le montage, le diagnostic, la réparation ou le remplacement de l'interconnexion. Ceci a pour conséquence que l'interconnexion devra être située dans une partie découverte du véhicule où elle est soumise aux gravillons.

Il est donc nécessaire de fournir une solution permettant un accès facile à une interconnexion entre un faisceau de câblage provenant du compartiment moteur et un faisceau de câblage provenant de la cabine du véhicule, avec une protection contre les gravillons.

### Résumé de l'invention

L'invention concerne un support pour la fixation et la connexion d'un premier faisceau de câblage provenant d'un compartiment moteur d'un véhicule et d'un deuxième faisceau de câblage provenant d'une cabine dudit véhicule, comprenant :
- au moins une portion de fixation pour la fixation du premier faisceau de câblage contre le support,
- au moins une portion de fixation pour la fixation du deuxième faisceau de câblage contre le support,
- au moins une portion d'attache pour l'attache du support à une partie de soutien du véhicule
- une partie de connexion pour une connexion électrique entre les premier et deuxième faisceaux de câblage, et
une partie de blindage configurée pour protéger ladite partie de connexion ainsi que les connecteurs du faisceau de câblage contre les gravillons.

Le support comporte des fixations respectives des premier et deuxième faisceaux, ainsi qu'une partie de connexion pour connecter électriquement le premier faisceau au deuxième faisceau. Ainsi, le support met en œuvre deux fonctions, à savoir une fonction de fixation des faisceaux de câblage et une fonction de connexion électrique des faisceaux de câblage. L'emballage des composants du véhicule est donc amélioré. De plus, la partie de blindage permet de protéger la partie de connexion, même lorsque le support est destiné à être fixé sur une portion du véhicule qui peut recevoir des gravillons ou d'autres particules provenant de l'extérieur, plus particulièrement d'une route sur laquelle le véhicule se déplace. En particulier, tel est le cas lorsque le support est monté sur une partie du châssis du véhicule qui est une partie inférieure découverte du châssis du véhicule.

Selon un mode de réalisation, ladite partie de blindage s'étend devant un côté de la partie de connexion pour protéger ladite partie de connexion ainsi que les connecteurs du faisceau de câblage contre les gravillons.

Selon un mode de réalisation, le support comprend une feuille pliée comportant une première plaque plate ayant une face avant et une face arrière, ladite face arrière étant destinée à venir contre la partie de soutien du véhicule,
ladite première plaque comprenant
   une première partie d'attache au niveau d'un premier coin,
   une deuxième partie d'attache au niveau d'un deuxième coin diagonalement opposé audit premier coin, et
   une première oreille découpée à partir d'un premier bord de la première plaque et pliée pour s'étendre transversalement, de préférence perpendiculairement, au-dessus de la face avant de la première plaque, ladite première oreille ayant un trou traversant pour le montage de la partie de connexion,
ladite partie de connexion comprenant une première portion attachée à une première face de ladite première oreille pour recevoir un connecteur du premier faisceau de câblage, et une deuxième portion attachée à une deuxième face de ladite première oreille, opposée à la première face, pour recevoir un connecteur du deuxième faisceau de câblage.

Selon une variante, le support comprend une deuxième oreille s'étendant à partir d'un deuxième bord de ladite première plaque, ledit deuxième bord étant opposé au premier bord de la première plaque, et comprenant une portion de fixation du deuxième faisceau de câblage à une extrémité distale de celui-ci.

Selon une variante, la partie de blindage s'étend à partir d'un troisième bord de la première plaque, ledit troisième bord étant opposé à la première oreille,
la partie de blindage comprenant :
une première portion formant une paroi inclinée s'étendant transversalement à partir de la première plaque,
une deuxième portion s'étendant à partir de la première portion, en parallèle par rapport à la première plaque, et
une troisième portion s'étendant à partir de la deuxième portion transversalement, en particulier perpendiculairement, par rapport à la première plaque, ladite troisième portion comprenant l'au moins une portion de fixation du premier faisceau de câblage sur sa face en regard de ladite partie de connexion.

Selon une variante, la première portion de la partie de blindage fait un angle supérieur à 90° et inférieur à 180°, de préférence égal à 135°, par rapport à la face avant de la première plaque.

Selon une variante, la troisième portion comprend une première portion de fixation du premier faisceau de câblage près d'un premier bord latéral de celle-ci et une deuxième portion de fixation du premier faisceau de câblage près d'un deuxième bord latéral, opposé audit premier bord latéral, configurées de telle sorte que le premier faisceau de câblage s'étend sur l'ensemble de la troisième portion sur la surface de celle-ci en regard de la partie de connexion.

L'invention concerne également un véhicule comportant un support selon l'invention, le support étant fixé à un organe latéral inférieur découvert d'un châssis du véhicule, ledit organe latéral inférieur connectant un compartiment moteur et une zone de soubassement du châssis.

Selon un mode de réalisation, le véhicule comprend un premier faisceau de câblage provenant du compartiment moteur du véhicule et un deuxième faisceau de câblage provenant d'une cabine dudit véhicule,
lesdits premier faisceau de câblage et deuxième faisceau de câblage étant fixés aux portions de fixation respectives du support, et
lesdits premier faisceau de câblage et deuxième faisceau de câblage étant connectés électriquement par le biais de la partie de connexion du support.

Selon un mode de réalisation, le premier faisceau de câblage comprend :
une première portion s'étendant à partir du premier bord latéral de la troisième portion de la partie de blindage jusqu'au deuxième bord latéral de la troisième portion de la partie de blindage, et
une deuxième portion repliée à partir du deuxième bord latéral de la troisième portion de la partie de blindage vers la partie de connexion pour une connexion électrique,
ledit organe latéral inférieur comprenant une autre portion de fixation pour la fixation de ladite deuxième portion du premier faisceau de câblage.

Selon un mode de réalisation, le premier faisceau de câblage est connecté à un chargeur électrique dans le compartiment moteur et le deuxième faisceau de câblage est connecté à une prise dans la cabine pour charger un appareil, en particulier un appareil d'un passager, tel qu'un ordinateur portable ou un téléphone mobile.

### Liste des figures

[Fig. 1] La figure 1 illustre un véhicule dans un système de coordonnées tridimensionnel défini par les plans de référence X-0, Y-0 et Z-0.

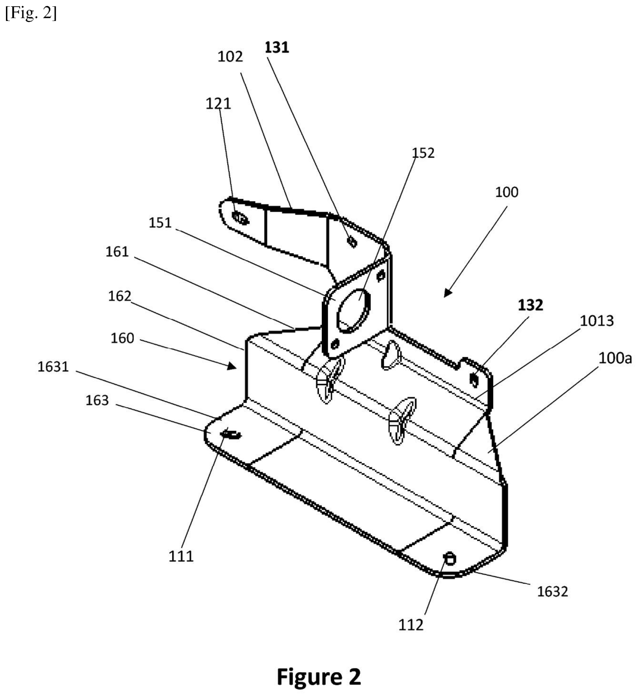

[Fig. 2] La figure 2 représente une vue en perspective d'un support selon un exemple de l'invention.

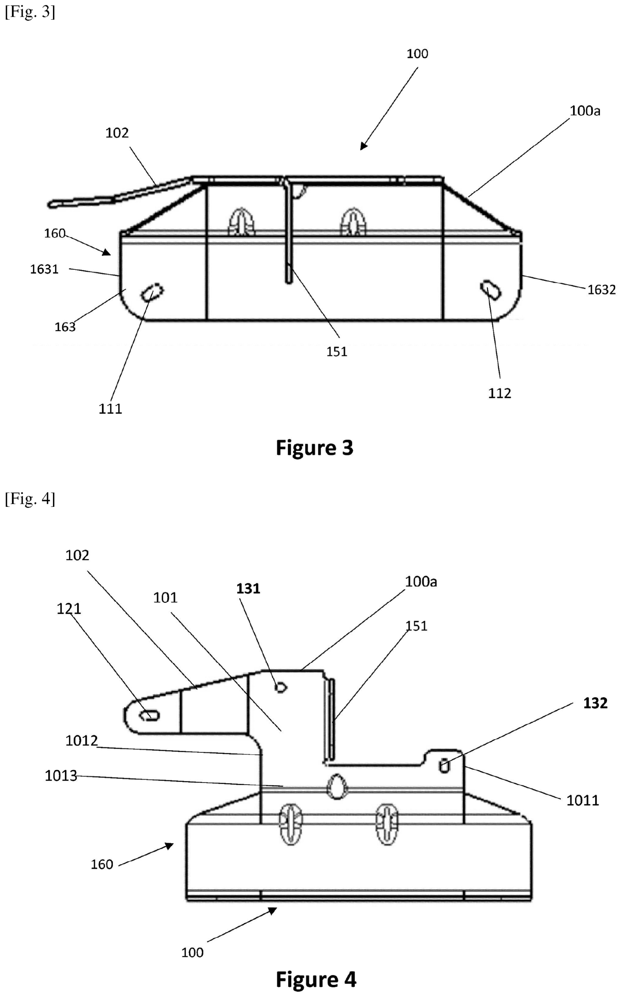

[Fig. 3] La figure 3 offre une vue de dessus du support le long de la direction verticale +Z-Z.
[Fig. 4] La figure 4 décrit une vue de face du support le long de la direction transversale -Y+Y.

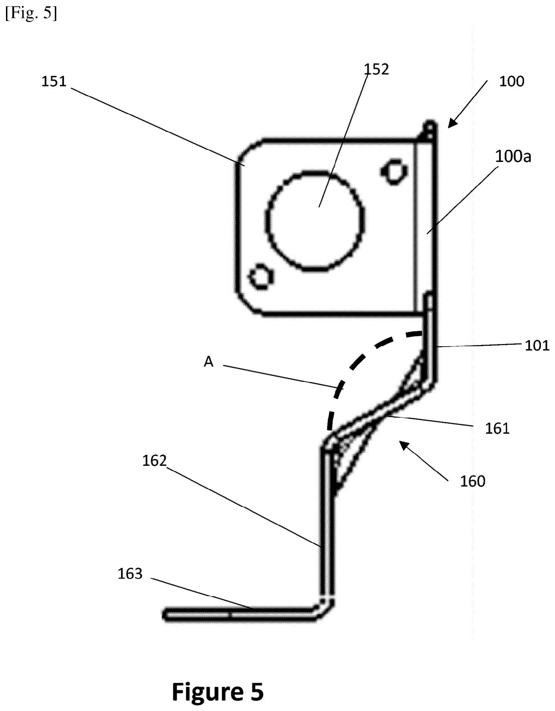

[Fig. 5] La figure 5 présente une vue de côté du support le long de la direction longitudinal +X-X, mettant l'accent sur la partie de blindage et sa configuration angulaire.

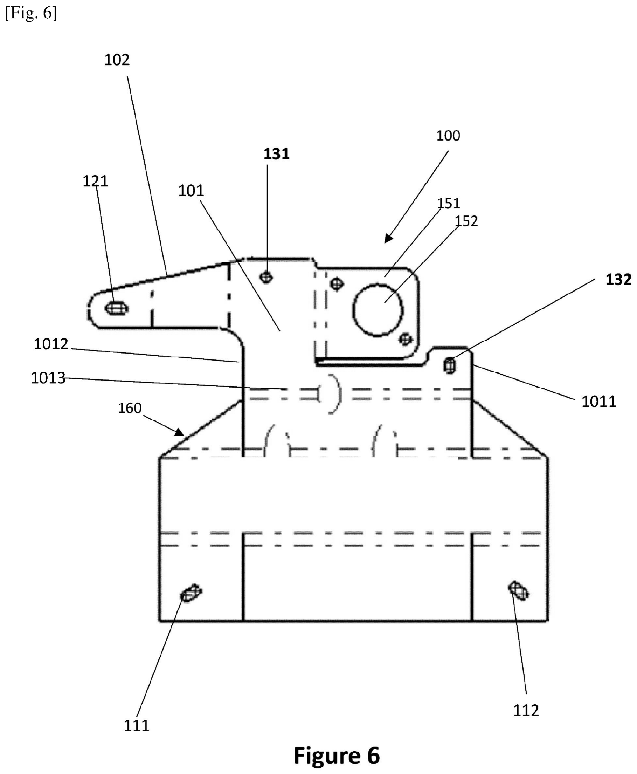

[Fig. 6] La figure 6 représente une vue déployée d'une feuille du support.

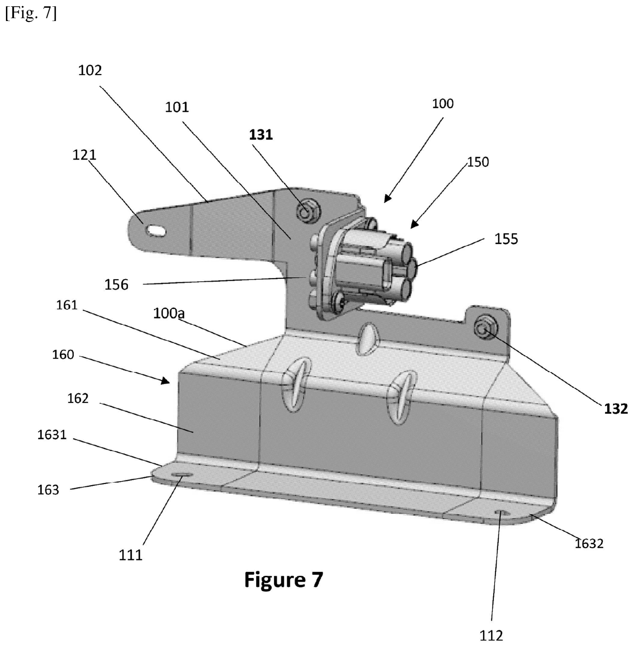

[Fig. 7] La figure 7 représente une vue en perspective du support avec la partie de connexion montée.

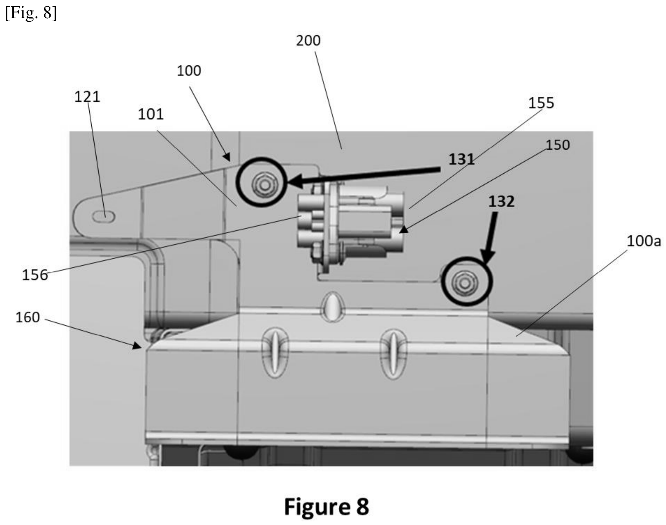

[Fig. 8] La figure 8 offre une vue de face du support attaché à la partie de soutien du véhicule le long de la direction transversale -Y+Y.

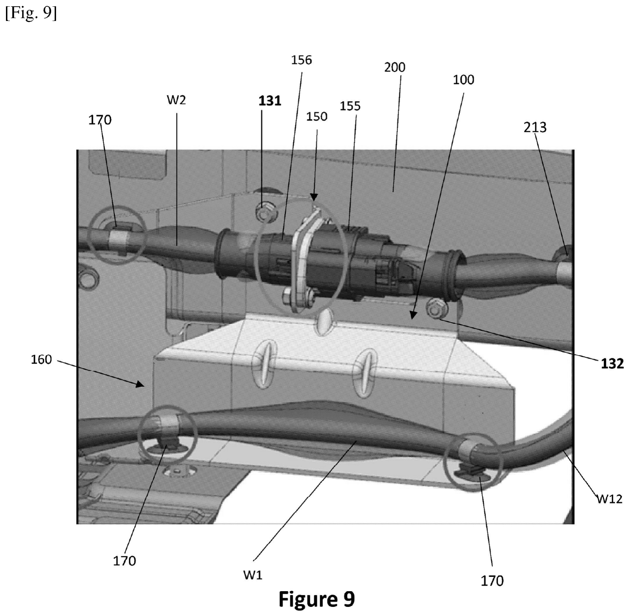

[Fig. 9] La figure 9 illustre le support lors de l'utilisation, avec le premier faisceau de câblage et le deuxième faisceau de câblage connectés et fixés.

### Description détaillée

Le support 100 est conçu pour la fixation et la connexion d'un premier faisceau de câblage W1 provenant du compartiment moteur d'un véhicule et d'un deuxième faisceau de câblage W2 provenant de la cabine du véhicule. Le support 100 comprend au moins une portion de fixation 111, 112 pour la fixation du premier faisceau de câblage W1 contre le support 100, et au moins une portion de fixation 121 pour la fixation du deuxième faisceau de câblage W2 contre le support 100. Au moins une portion d'attache 131, 132 permet d'attacher le support 100 à une partie de soutien 200 du véhicule. Le support 100 comprend également une partie de connexion 150 pour une connexion électrique entre le premier et le deuxième faisceau de câblage W1, W2. Une partie de blindage 160 protège la partie de connexion 150 contre les gravillons, en particulier lorsque le support 100 est monté et le véhicule se déplace. Plus particulièrement, la partie de blindage 160 s'étend devant un côté de la partie de connexion 150 pour protéger ladite partie de connexion 150 ainsi que les connecteurs du faisceau de câblage W1, W2 contre les gravillons. Ainsi, la partie de blindage 160 protège la partie de connexion 150 ainsi que les connecteurs du faisceau de câblage W1, W2 contre des graviers incidents ou d'autres particules venant vers ce côté de la partie de connexion 150.

En particulier, le support 100 comprend une feuille pliée 100a qui comporte une première plaque plate 101 ayant une face avant et une face arrière. La face arrière de la première plaque 101 est destinée à venir contre la partie de soutien 200 du véhicule. La première plaque 101 présente une première partie d'attache 131 au niveau d'un premier coin et une deuxième partie d'attache 132 au niveau d'un deuxième coin diagonalement opposé au premier coin. Une première oreille 151 est découpée à partir d'un premier bord 1011 de la première plaque 101. La première oreille 151 est pliée pour s'étendre transversalement, de préférence perpendiculairement, au-dessus de la face avant de la première plaque 101. En outre, la première oreille 151 a un trou traversant 152 pour le montage de la partie de connexion 150. La partie de connexion 150 comprend une première portion 155 attachée à une première face de la première oreille 151, et une deuxième portion 156 attachée à une deuxième face de la première oreille 151, opposée à la première face. La première portion 155 sert à recevoir un connecteur du premier faisceau de câblage W1. La deuxième portion 156 sert à recevoir un connecteur du deuxième faisceau de câblage W2. Du fait de cet agencement, le support 100 assure une connexion électrique entre les premier W1 et deuxième W2 faisceaux de câblage d'une manière compacte.

En particulier, le support 100 comporte également une deuxième oreille 102 s'étendant à partir d'un deuxième bord 1012 de la première plaque 101. Le deuxième bord 1012 est opposé au premier bord 1011 de la première plaque 101. À son extrémité distale, la deuxième oreille 102 comprend une portion de fixation 121 pour le deuxième faisceau de câblage W2.

En particulier, la partie de blindage 160 s'étend à partir d'un troisième bord 1013 de la première plaque 101. Le troisième bord 1013 de la première plaque 101 est opposé à la première oreille 151. À savoir, le troisième bord 1013 de la première plaque 101 s'étend entre le premier bord 1011 et le deuxième bord 1012 sur un côté de la première plaque 101 qui est opposé à la première oreille 151.

Plus particulièrement, la partie de blindage 160 comprend une première portion 161, une deuxième portion 162 et une troisième portion 163. La première portion 161 forme une paroi inclinée s'étendant transversalement à partir de la première plaque 101. La deuxième portion 162 s'étend à partir de la première portion 161 en parallèle par rapport à la première plaque 101. La troisième portion 163 s'étend à partir de la deuxième portion 162 transversalement, en particulier perpendiculairement, par rapport à la première plaque 101. La troisième portion 163 comprend une portion de fixation 111, 112 du premier faisceau de câblage W1 sur sa face en regard de la partie de connexion 150. Par conséquent, la portion de fixation 111, 112 du premier faisceau de câblage W1 est également protégée contre les gravillons provenant d'un côté de la partie de blindage 160 opposé à la partie de connexion 150.

Plus précisément, la troisième portion 163 a un premier bord latéral 1631 et un deuxième bord latéral 1632. Une première portion de fixation 111 du premier faisceau de câblage W1 est comprise dans la troisième portion 163, près du premier bord latéral 1631. Une deuxième portion de fixation 112 du premier faisceau de câblage W1 est comprise dans la troisième portion 163, près du deuxième bord latéral 1632. Cette configuration garantit que le premier faisceau de câblage W1 s'étend sur l'ensemble de la troisième portion 163 sur la surface de celle-ci en regard de la partie de connexion 150.

En particulier, la première portion 161 de la partie de blindage 160 fait un angle A supérieur à 90° et inférieur à 180°, de préférence égal à 135°, par rapport à la face avant de la première plaque 101. Par conséquent, la portion de blindage 160 peut mettre en œuvre une protection contre les gravillons tout en permettant un accès facile à la partie de connexion 150 par un opérateur à des fins de services.

Les portions de fixation 111, 112, 121 peuvent comprendre respectivement un clip 170, qui coopère avec une partie conjuguée située sur le faisceau de câblage W1, W2 respectif.

Un véhicule donné à titre d'exemple comporte le support 100 fixé à un organe latéral inférieur découvert 200 d'un châssis du véhicule, connectant le compartiment moteur et la zone de soubassement du châssis. Plus particulièrement, le support 100 est fixé à une surface verticale de l'organe latéral inférieur 200.

En particulier, un premier faisceau de câblage W1 provenant du compartiment moteur et un deuxième faisceau de câblage W2 provenant de la cabine sont fixés aux portions de fixation 111, 112, 121 respectives du support 100 et sont connectés électriquement par le biais de la partie de connexion 150 du support 100.

Par exemple, le premier faisceau de câblage W1 comprend une première portion W11 s'étendant à partir du premier bord latéral 1631 jusqu'au deuxième bord latéral 1632 de la troisième portion 163 de la partie de blindage 16. Une deuxième portion W12 est repliée à partir du deuxième bord latéral 1632 de la troisième portion 163 de la partie de blindage 160 vers la partie de connexion 150 pour une connexion électrique. L'organe latéral inférieur 200 comprend une portion de fixation 213 supplémentaire pour la fixation de la deuxième portion W12 du premier faisceau de câblage W1. Ainsi, la fixation du premier faisceau de câblage W1 est améliorée.

En particulier, le premier faisceau de câblage W1 est connecté à un chargeur électrique dans le compartiment moteur, et le deuxième faisceau de câblage W2 est connecté à une prise située dans la cabine du véhicule pour charger un appareil, tel qu'un ordinateur portable ou un téléphone mobile.

Les avantages principaux de l'invention comportent la connexion sécurisée et efficace de faisceaux de câblage provenant de différents compartiments du véhicule, la protection de la partie de connexion contre les gravillons et la fourniture d'un support robuste et fiable qui peut être facilement fixé au châssis du véhicule. Cette invention aborde le problème de la garantie d'une connexion électrique stable et protégée entre des faisceaux de câblage dans un véhicule, améliorant la fiabilité et la sécurité globales du système électrique du véhicule.

## Revendications

1. Support (100) pour la fixation et la connexion d'un premier faisceau de câblage (W1) provenant d'un compartiment moteur d'un véhicule et d'un deuxième faisceau de câblage (W2) provenant d'une cabine dudit véhicule, comprenant :
- au moins une portion de fixation (111, 112) pour la fixation du premier faisceau de câblage (W1) contre le support (100),
- au moins une portion de fixation (121) pour la fixation du deuxième faisceau de câblage (W2) contre le support (100),
- au moins une portion d'attache (131, 132) pour l'attache du support (100) à une partie de soutien (200) du véhicule
- une partie de connexion (150) pour une connexion électrique entre les premier et deuxième faisceaux de câblage (W1, W2), et
une partie de blindage (160) configurée pour protéger ladite partie de connexion (150) ainsi que les connecteurs du faisceau de câblage (W1, W2) contre les gravillons.

2. Support (100) selon la revendication 1, dans lequel ladite partie de blindage (160) s'étend devant un côté de la partie de connexion (150) pour protéger ladite partie de connexion (150) ainsi que les connecteurs du faisceau de câblage (W1, W2) contre les gravillons.

3. Support (100) selon la revendication 1 ou 2, comprenant une feuille pliée (100a) comportant une première plaque plate (101) ayant une face avant et une face arrière, ladite face arrière étant destinée à venir contre la partie de soutien (200) du véhicule,
ladite première plaque (101) comprenant
une première partie d'attache (131) au niveau d'un premier coin,
une deuxième partie d'attache (132) au niveau d'un deuxième coin diagonalement opposé audit premier coin, et
une première oreille (151) découpée à partir d'un premier bord (1011) de la première plaque (101) et pliée pour s'étendre transversalement, de préférence perpendiculairement, au-dessus de la face avant de la première plaque (101), ladite première oreille (151) ayant un trou traversant (152) pour le montage de la partie de connexion (150),
ladite partie de connexion (150) comprenant une première portion (155) attachée à une première face de ladite première oreille (151) pour recevoir un connecteur du premier faisceau de câblage (W1), et une deuxième portion (156) attachée à une deuxième face de ladite première oreille (151), opposée à la première face, pour recevoir un connecteur du deuxième faisceau de câblage (W2).

4. Support (100) selon la revendication 3, comprenant une deuxième oreille (102) s'étendant à partir d'un deuxième bord (1012) de ladite première plaque (101), ledit deuxième bord (1012) étant opposé au premier bord (1011) de la première plaque (101), et comprenant une portion de fixation (121) du deuxième faisceau de câblage (W2) à une extrémité distale de celui-ci.

5. Support (100) selon la revendication 3 ou 4, dans lequel la partie de blindage (160) s'étend à partir d'un troisième bord (1013) de la première plaque (101), ledit troisième bord (1013) étant opposé à la première oreille (151),
la partie de blindage (160) comprenant :
une première portion (161) formant une paroi inclinée s'étendant transversalement à partir de la première plaque (101),
une deuxième portion (162) s'étendant à partir de la première portion (161), en parallèle par rapport à la première plaque (101), et
une troisième portion (163) s'étendant à partir de la deuxième portion (162) transversalement, en particulier perpendiculairement, par rapport à la première plaque (101), ladite troisième portion (163) comprenant l'au moins une portion de fixation (111, 112) du premier faisceau de câblage (W1) sur sa face en regard de ladite partie de connexion (150).

6. Support (100) selon la revendication 5, dans lequel la première portion (161) de la partie de blindage (160) fait un angle (A) supérieur à 90° et inférieur à 180°, de préférence égal à 135°, par rapport à la face avant de la première plaque (101).

7. Support (100) selon la revendication 5 ou 6, dans lequel la troisième portion (163) comprend une première portion de fixation (111) du premier faisceau de câblage (W1) près d'un premier bord latéral (1631) de celle-ci et une deuxième portion de fixation (112) du premier faisceau de câblage (W1) près d'un deuxième bord latéral (1632), opposé audit premier bord latéral (1631), configurées de telle sorte que le premier faisceau de câblage (W1) s'étend sur l'ensemble de la troisième portion (163) sur la surface de celle-ci en regard de la partie de connexion (150).

8. Véhicule comportant un support (100) selon l'une quelconque des revendications précédentes, ledit support (100) étant fixé à un organe latéral inférieur découvert (200) d'un châssis du véhicule, ledit organe latéral inférieur (200) connectant un compartiment moteur et une zone de soubassement du châssis.

9. Véhicule selon la revendication 8, comprenant un premier faisceau de câblage (W1) provenant du compartiment moteur du véhicule et un deuxième faisceau de câblage (W2) provenant d'une cabine dudit véhicule,
le premier faisceau de câblage (W1) et ledit deuxième faisceau de câblage (W2) étant fixés aux portions de fixation (111, 112, 121) respectives du support (100), et
lesdits premier faisceau de câblage (W1) et deuxième faisceau de câblage (W2) étant connectés électriquement par le biais de la partie de connexion (150) du support (100).

10. Véhicule selon la revendication précédente, comprenant un support (100) selon la revendication 5, dans lequel le premier faisceau de câblage (W1) comprend :
une première portion (W11) s'étendant à partir du premier bord latéral (1631) de la troisième portion (163) de la partie de blindage (160) jusqu'au deuxième bord latéral (1632) de la troisième portion (163) de la partie de blindage (160), et
une deuxième portion (W12) repliée à partir du deuxième bord latéral (1632) de la troisième portion (163) de la partie de blindage (160) vers la partie de connexion (150) pour une connexion électrique,
ledit organe latéral inférieur (200) comprenant une autre portion de fixation (213) pour la fixation de ladite deuxième portion (W12) du premier faisceau de câblage (W1).

11. Véhicule selon la revendication 9 ou 10, dans lequel le premier faisceau de câblage (W1) est connecté à un chargeur électrique dans le compartiment moteur et le deuxième faisceau de câblage (W2) est connecté à une prise dans la cabine pour charger un appareil, en particulier un appareil d'un passager, tel qu'un ordinateur portable ou un téléphone mobile.
